# EUROPEAN PATENT APPLICATION

(11) **EP 1 641 138 A1**
(43) Date of publication of application: **29.03.2006**
(21) Application number: 04746240.3
(22) Date of filing: 16.06.2004
(51) Int. Cl.: H04B 3/56, H01F 17/06

(54) **SIGNAL FILLING/EXTRACTION DEVICE**

(30) Priority: 17.06.2003 JP 2003171460; 17.09.2003 JP 2003324096
(71) Applicant: Sumitomo Electric Industries, Ltd., Osaka-shi, Osaka 541-0041 (JP)
(72) Inventor: KUWABARA, Masahiro, c/o Sumitomo Electric Ind. Ltd, Osaka-shi, Osaka 554-0024 (JP); HIROTSU, Kenichi, c/o Sumitomo Electric Ind. Ltd., Osaka-shi, Osaka 554-0024 (JP); SHIMOGUCHI, T., c/o Sumitomo Electric Ind. Ltd., Osaka-shi, Osaka 554-0024 (JP); ASAO, Yoshihisa, c/o Sumitomo Electric Ind. Ltd., Osaka-shi, Osaka 554-0024 (JP)
(74) Representative: Cross, Rupert Edward Blount
(86) International application number: PCT/JP2004/008771
(87) International publication number: WO 2004/112274

(57) **Abstract**

There is provided a core 2 of a ferromagnetic body through which an power line 1 passes. A second winding 3 is wound on the core 2. An amplifier 4 and an LPF 5 that are examples of electrical circuit units continue to the winding. An electrical current induced by magnetic flux φ1 produced in the core 2 by the current flowing through the power line 1 is amplified, and high frequencies are removed. The obtained current flows through a third winding 6 wound on the core 2, producing 180° out-of-phase magnetic flux φ₂ that cancels the portion of the magnetic flux φ₁ in the core which corresponds to low-frequency currents. The magnetic field produced by the remaining RF portion can be extracted as an RF signal by a first winding 7. Conversely, if a current for signal is applied to the first winding 7, the current can be injected into the commercial current in the power line 1.

## Description

### BACKGROUND OF THE INVENTION

### 1.Field of the Invention

The present invention relates to an apparatus for injecting and extracting signals and, more particularly, to a signal injection-extraction apparatus for injecting or extracting an RF signal into or from a commercial power line.

### 2.Description of the Related Art

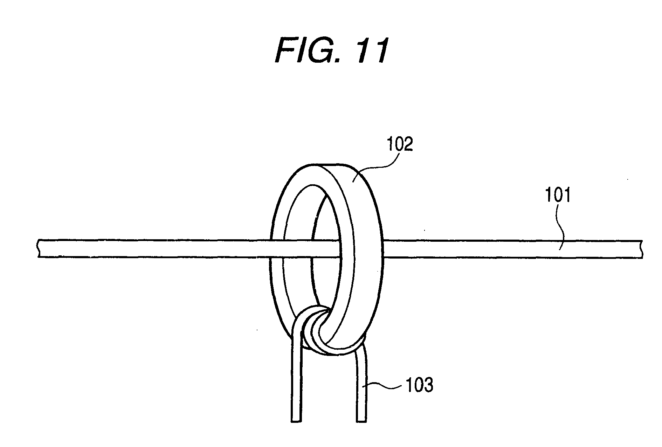

A method using a ferromagnetic core, for instance a ferrite core, has been proposed in cases where an electrical communication signal is superimposed on a power line in a power line carrier communication system. Fig. 11 shows its example where there is a ferromagnetic core 102 through which a power line 101 passes, and a winding 103 is wound around it. With this structure, RF communication signal can be superimposed on the power line 101 by passing the RF communication signal through the winding 103. On the contrary, the RF communication signal that is superimposed and transmitted through the power line 101 is passed through the ferromagnetic ring core 102 so that the magnetic flux is generated, and induces electrical current corresponding to the RF communication signal in the winding 103. As the result, the RF communication signal can be taken out from the power line 101.

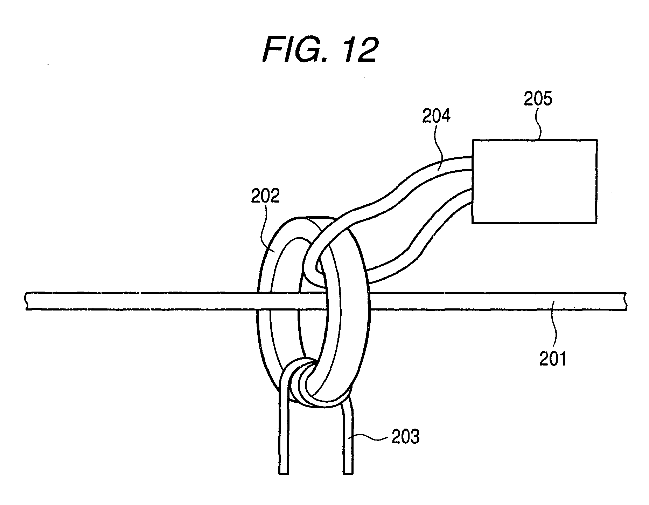

This method can be performed by quite simple means, however, the commercial current of 50 or 60 Hz, which is loaded into the power line 101, is much greater current than that of the superimposed RF communication signal in general, which dominates the magnetic flux of the ferromagnetic core 102. More specifically, once the commercial current saturated the magnetic flux generated in the core 102, it becomes impossible to detect the RF communication signal any longer. In an attempt to solve such a problem, means for canceling the magnetic flux has been introduced (see Patent Reference 1) . That is, another winding is separately wound around the ferromagnetic core apart from the winding for passing the RF communication signal. This arrangement can cancel the magnetic flux of the winding by another magnetic flux generated by the electrical current produced in said another winding. Alternatively, said magnetic flux cancellation can be made by passing an electrical current from a separate circuit through the winding. The same method as that of the above-mentioned example is shown in Fig. 12. It shows a ferromagnetic core 202 through which a power line 201 passes, and a winding 203 is wound around it so that RF communication signal can be passed through the winding. In this way, the RF communication signal is superimposed on the power line 201. Further, an additional winding 204 is wound around the outer surface of the ferromagnetic core 202, and current load from an external circuit 205 is applied to the winding 204. The magnetic flux in the ferromagnetic core 202 generated, by the current from the external circuit cancels that of being generated by the commercial current flowing through the power line 201. As the result, the saturated magnetic flux condition in the ferromagnetic ring core can be prevented so that the problem of inoperable detection of the RF communication signal can be also overcome.

[Patent Reference 1]

JP-A-2001-319815 (0003-0006, 0024-0026)

The above described related arts might be a quite reasonable and simple method in a sense of employing the magnetic flux cancellation means with the structures such that a separate winding is wound around the core so as to cancel the magnetic flux in the core due to the commercial current, or loading another current to the winding is adopted for doing the same . In these methods, although the magnetic flux can be canceled theoretically, substantial adjustments might be also required. That is, in order to secure the cancellation of the magnetic flux, further adjustments are required such as to adjust the specifications of the canceling winding, or adjust the phase of the external electric power accordingly. However, it still remains somepossibilityof leavingsmallmagnetic flux variation depending on the degree of these adjustments. This small magnetic flux variation will give some influence to the electrical current when the RF communication signals are extracted or injected. Furthermore, there is another drawback of the inductance of the canceling coil which ends up attenuating the RF communication currents.

### SUMMARY OF THE INVENTION

The objects of the present invention is to provide an apparatus for injecting or extracting a small RF current for communications to or from the commercial current flowing through the power line, which is capable of removing the effects of said commercial current almost completely, and also capable of injecting or extracting said RF signals without attenuation.

One of the aspects of this invention is to provide an apparatus for injecting and extracting signals, comprising: a ferromagnetic core which allows a line conductor to pass therethrough; a first winding wound around an outer surface of said ferromagnetic core which extracts a signal of a first frequency flowing through the line conductor, or injects a signal of the first frequency into the line conductor; a second winding wound around the outer surface of said ferromagnetic core, which enables to extract a signal of the first and the second frequencies from a magnetic flux φ₁ that is generated in said ferromagnetic core by an electric current having the first and the second frequencies which flows through the line conductor, said second winding allowing an electric current corresponding to the first and second frequencies to flow therethrough; an electrical circuit means for amplifying the electric current extracted from said second winding and removing current components of the first frequency, and a third winding, being wound around the outer surface of said ferromagnetic core and connected to said electrical circuit means, through which a signal for generating a magnetic flux φ₂ in the ferromagnetic core is produced, wherein said magnetic flux φ₂ is formed to be corresponding to current components of the second frequency, and a phase thereof is set to be a phase inverse to that of the magnetic flux φ1.

According to the above aspect of the invention, through the amplifier and the low pass filter, it makes it possible for providing the third winding with the current to cancel only part of the magnetic flux, corresponding to the second frequency of a low frequency, by applying the magnetic flux of which phase is inverse to the magnetic flux that is generated by the current flowing through the line conductor with having the first and second frequencies. As the result, only the first frequency current with high frequency can be injected or extracted without influenced of the commercial current.

Another aspect of this invention is to provide an apparatus for injecting and extracting signals, comprising: a ferromagnetic core which allows a line conductor to pass therethrough; a second winding wound around the outer surface of said ferromagnetic core, which enables to extract a signal of the first and the second frequencies from a magnetic flux φ₁ that is generated in said ferromagnetic core by an electric current having the first and the second frequencies which flows through the line conductor, said second winding allowing an electric current corresponding to the first and second frequencies to flow therethrough; an electrical circuit means for amplifying the electric current extracted from said second winding and removing current components of the first frequency; a third winding wound around the outer surface of said ferromagnetic core to inject a signal for producing magnetic flux φ₂ in the core of said ferromagnetic core in such a way that said magnetic flux φ₂ is formed to be corresponding to the current of said second frequency, and a phase thereof is set to be a phase inverse to that of said magnetic flux φ₁; and a communication circuit means , being branching off from said third winding, which enables to extract or inject a signal of the first frequency.

According to the above aspect of the invention, it makes it possible for injecting or extracting the first frequency signal through the third winding for the low cost, which is achieved by the communication circuit means with the capacitor functioning as the high-pass filter, on top of the magnetic cancellation process in the manner mentioned in this invention.

Still another aspect of this invention is to provide an apparatus for injecting and extracting signals, comprising: a first ferromagnetic core which allows a line conductor to pass therethrough; a first winding wound around an outer surface of said first ferromagnetic core which extracts a signal of a first frequency flowing through the line conductor, or injects a signal of the first frequency into the line conductor; a second ferromagnetic core, being disposed separately from the first ferromagnetic core which allows the line conductor to pass therethrough; a second winding wound around the outer surface of said second ferromagnetic core, which enables to extract a signal of the first and the second frequencies from a magnetic flux φ₁ that is generated in said second ferromagnetic core by an electric current having the first and the second frequencies which flows through the line conductor, said second winding allowing an electric current corresponding to the first and second frequencies to flow therethrough; an electrical circuit means for amplifying the electric current extracted from said second winding and removing current components of the first frequency, and a third winding wound around the outer surface of said first ferromagnetic core to inject a signal for producing magnetic flux φ₂ in the core of said first ferromagnetic core in such a way that said magnetic flux φ₂ is formed to be corresponding to the current of said second frequency, and a phase thereof is set to be a phase inverse to that of said magnetic flux φ₁.

According to the above aspect of the invention, it makes it possible for canceling the magnetic flux generated in the first ferromagnetic core by the magnetic flux that is generated on the basis of the another magnetic flux generated by the second ferromagnetic core. In this case, thanks to the second ferromagnetic core with the gap being formed therein, the magnetic flux can be leaked out appropriately so that occurrence of the magnetic saturation can be avoided. As the result, only the communication current can be injected or extracted into or from the line conductor by canceling the second frequency signal in secure way.

Further aspect of this invention is to provide an apparatus for injecting and extracting signals, comprising: a first ferromagnetic core which allows a line conductor to pass therethrough; a first winding wound around an outer surface of said first ferromagnetic core which extracts a signal flowing through the line conductor, or injects a signal into the line conductor; a second ferromagnetic core, being disposed separately from the first ferromagnetic core which allows the line conductor to pass therethrough; a second winding wound around the outer surface of said second ferromagnetic core, which enables to output an electric current based on a magnetic flux that is generated in said first ferromagnetic core by an electric current flowing through the line conductor; an electrical circuit means for processing the electric current extracted from said second winding so as to extract current component having a certain frequency; a third winding wound around the outer surface of a third ferromagnetic core; a fourth winding wound around the outer surfaces of said first and third ferromagnetic cores.

Accordingly, injecting or extracting the communication signals into or from the power line can be performed without influence of the commercial current. Further, current load to the electronical circuit means can be reduced by converting the processing current to be smaller one from the large current having the second frequency. Still further, efficient injection or extraction into or from the line conductor, with respect of the RF current having the first frequency, can be performed by increasing the impedance of the canceling current produced by the fourth wiring which is wound around the first ferromagnetic core.

According to the signal injection extraction apparatus in this invention, it is characterized that the first frequency is relatively high frequency, while the second frequency is relatively low one. Such a rather wide frequency difference makes the signal processing more easily. More specifically, it is preferable to use the 50Hz or 60Hz commercial current as one of the frequencies.

According to the signal injection extraction apparatus in this invention, it is characterized that the electrical circuit means includes the amplifier and the low pass filter. Having these electrical components, the low frequency signal, which might bring about interference against the communication signal, might be removed by the inverse phase signal obtained through the processes of amplifying, filtering frequency, phase adjustment, and so on, whereby injecting or extracting the communication signals can be achieved without loss.

According to the signal injection extraction apparatus in this invention, it is characterized that the second frequency is based on the commercial frequency whereby separating the RF signal from the commercial frequency such as 50Hz or 60Hz can be readily performed.

According to the signal injection extraction apparatus in this invention, it is characterized that the communication circuit means has a capacitor which is functioning as a high pass filter so that injection or extraction of the RF signal against the line conductor can be readily achieved.

According to the signal injection extraction apparatus in this invention, it is characterized that the third winding, the third ferromagnetic core, and the fourth winding are provided with a plurality numbers thereof respectively. Having this configuration, the magnetic saturation can be prevented.

According to the signal injection extraction apparatus in this invention, it is characterized that the first ferromagnetic core is made of ferrite, further wherein each of the second and third ferromagnetic cores is made of iron or silicon steel laminations. Having these cores, the effective RF signal injection or extraction can be performed under high magnetic permeability and RF coupling ratio, and phase detection or current amplifying can be also performed with large capacity to the magnetic saturation.

According to the signal injection extraction apparatus in this invention, it is characterized that number of turns of the third winding wound around the third ferromagnetic core is greater than that of the fourth winding. Having this configuration, larger current can be fed to the fourth winding after suppressing the current value when the current flows through the electrical circuit means.

According to the signal injection extraction apparatus in this invention, it is characterized that the second ferromagnetic core has a gap structure so that magnetic saturation can be suppressed with securing the accuracy of the current waveform to be detected.

### BRIEF DESCRIPTION OF THE DRAWINGS

Fig. 1 shows an example of an apparatus for injecting and extracting signals according to a first embodiment of the present invention.
Fig. 2 shows an example of the block diagrams of the internal configuration of the amplifier of Fig. 1.
Fig. 3 shows an example of an apparatus for injecting and extracting signals according to a second embodiment of the invention.
Fig. 4 shows an example of an apparatus for injecting and extracting signals according to a third embodiment of the invention.
Fig. 5 shows an example of the block diagram of the internal configuration of the variable amplifier of Fig. 4.
Fig. 6 shows an example of an apparatus for injecting and extracting signals according to a fourth embodiment of the invention.
Fig. 7 shows an example of the block diagram of the internal configuration of an electronical circuit means of fig. 6.
Fig. 8 shows an example of an apparatus for injecting and extracting signals according to a fifth embodiment of the invention.
Fig. 9 shows an example of the configuration of a means for performing experiments regarding injecting and extracting signals according to the invention.
Fig. 10 is a graph showing the characteristics of relation between the attenuation and the length at the signal injection and extraction according to the present invention.
Fig. 11 is a view showing a signal injection-extraction apparatus a related art.
Fig.12 is a view showing a signal injection-extraction apparatus in another related art.

### DESCRIPTION OF THE PREFERRED EMBODIMENTS

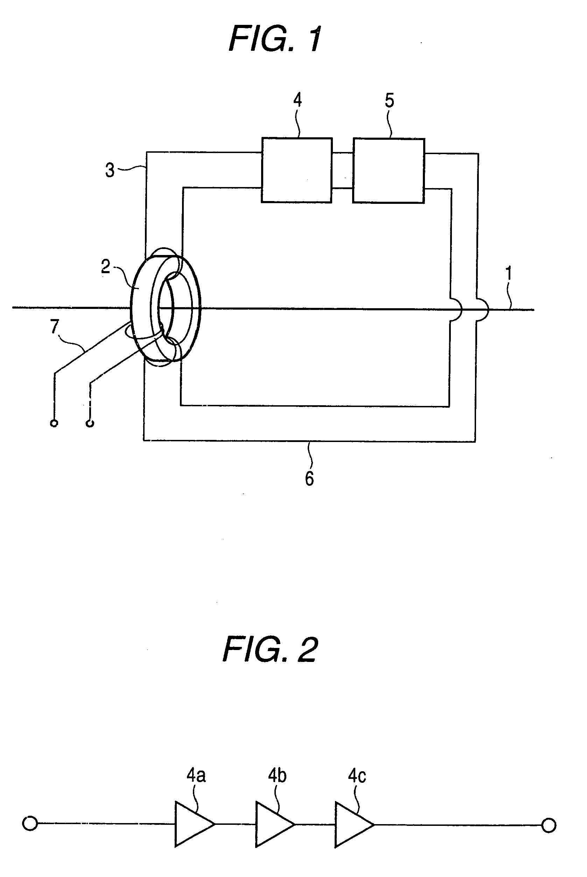

An example of the configuration of the first embodiment of the apparatus for injecting and extracting signals in accordance with the present invention is shown in Fig. 1. The present apparatus has a core 2 of a ferromagnetic body. A power line 1 that is a line conductor passes close to the center of the core. A second winding 3 is wound around the core 2. Electrical current, having first and second frequencies and flowing through the power line 1, produces magnetic flux φ₁ in the core 2. The magnetic flux induces electrical current having the first and second frequencies and flowing through the second winding 3. The current is amplified by an amplifier 4 that is one of electrical circuit means.

The amplifier circuit of the aforementioned amplifier 4 includes a current-voltage converter circuit 4a, a phase adjustment circuit 4b and a voltage-current converter circuit 4c, which are serially connected together as shown Fig. 2.

As to the current-voltage converter circuit 4a, it converts the incoming current having the first frequency and the second frequency, which are induced by the magnetic flux φ1 of the core 2, into the respective voltage. After receiving the converted voltage, the phase adjustment circuit 4b carries out adjusting the phase φ1 of the voltage to φ2 in such as way that the latter can cancel the former.

The phase-adjusted voltage by the phase adjustment circuit 4b is now converted to the current by the voltage-current converter circuit 4c, and the converted current is supplied to the third wiring 6 through the next low pass filter (LPF) 5 as the current to generate magnetic flux φ2.

At the low pass filter (LPF) 5, the RF (1.7 to 30 MHz) current components, corresponding to the communication currents with the first frequency, are removed so that only low-frequency current components of 50 or 60 Hz, corresponding to the commercial current with the second frequency, is thus output to the third winding 6. In this way, only the current with low frequency components confined by the LPF 5 flows through a third winding 6, which is wound around the core 2 that is used for generating φ₂. The current, passing through the third winding 6, thus generates the magnetic flux φ₂ so as to cancel the magnetic flux φ₁ that was already generated in the core 2. It is noted that although the magnetic flux φ₂ is used to cancel the magnetic flux φ₁ due to the commercial current, the magnetic flux corresponding to the communication current still remains without being cancelled. As for the magnetic flux excited in the core 2 by the power line 1, and the current which is induced by said excited magnetic flux and flows through the second winding 3, they are contemplating some loss in themselves. Furthermore, some additional loss might be also concerned due to the line resistance when the current passes through the third winding 6 from the LPF 5. In this regard, if further compensation for the losses can be carried out by the amplifier 4, generation of the magnetic flux in the core 2 due to the commercial current can be almost fully eliminated.

As described above, only the magnetic flux whose origin is stemming from the current for communications having the first frequency can remain in the core 2. This remaining magnetic flux induces only the RF communication current in the first winding 7 which is also wound around the core 2. In other words, the first winding 7 can extract the communication current superimposed on the power line 1.

On the other hand, by passing RF current for communications through the first winding 7 with using this apparatus, it is possible to inject the RF current for communications into the power line 1 by exciting the magnetic flux to the core 2.

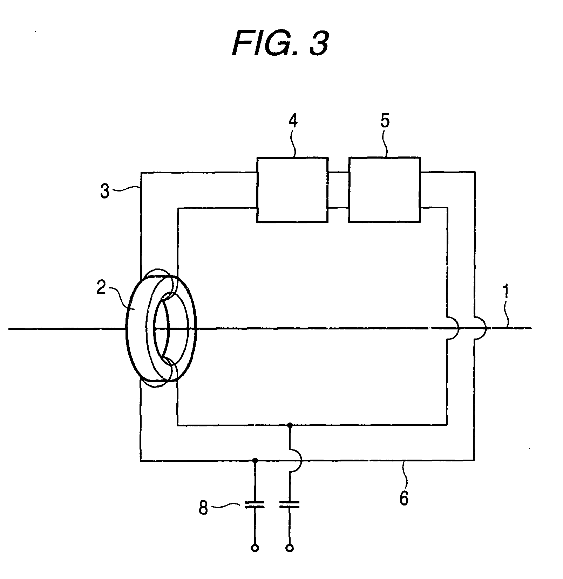

An example of the configuration of a second embodiment of the signal injection-extraction apparatus according to the invention is shown in Fig. 3. The present apparatus has configuration almost identical with the first embodiment, such as the ferromagnetic core 2 where the power line 1 as a line conductor passes through the vicinity of the center of the core, the second winding 3, the amplifier 4 which is functioning as on of the electrical circuit means, and the low pass filter 5. The second embodiment is differed from the first embodiment in that branching lines are provided between the LPF 5 and the wound portion of the core 2 in the third winding 6, and there provided with capacitors 8 at the ends of the branching lines.

The second invention injects or extracts the RF current for communications by utilizing the third winding 6 to play the same role that is performed by the first winding 7 wound directly on the core 2 in the first embodiment. In this regard, it can avoid necessity of winding the first winding around the core 2. Alternatively, the capacitors 8 that are provided as preferable means can be adopted to get rid of the effects of the low-frequency currents of the commercial current so as to enhance the accuracy of the communication signal.

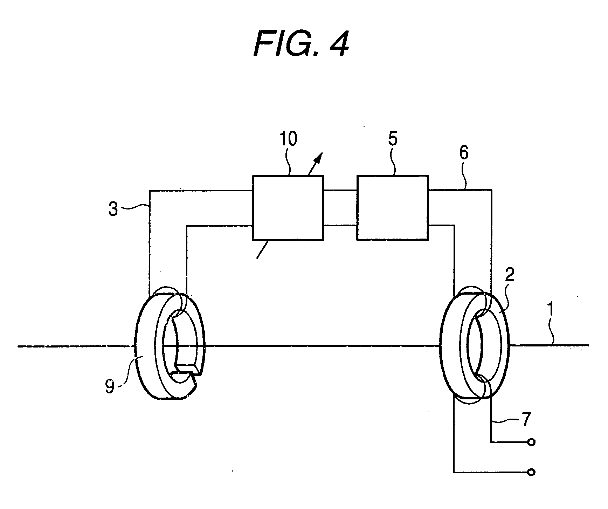

An example of the configuration of a third embodiment of the signal injection-extraction apparatus according to the invention is shown in Fig. 4. In this embodiment, there provided a pair of the cores made of the ferromagnetic bodies in such a way that the power line 1 is passing through the vicinities of the centers of both the cores. The commercial current passing through the power line 1, having the first frequency, with the communication current being superimposed thereon generates the magnetic flux in a core 9 as a second ferromagnetic body. The magnetic flux induces electrical current in the second winding 3 which is wound around the core 9.

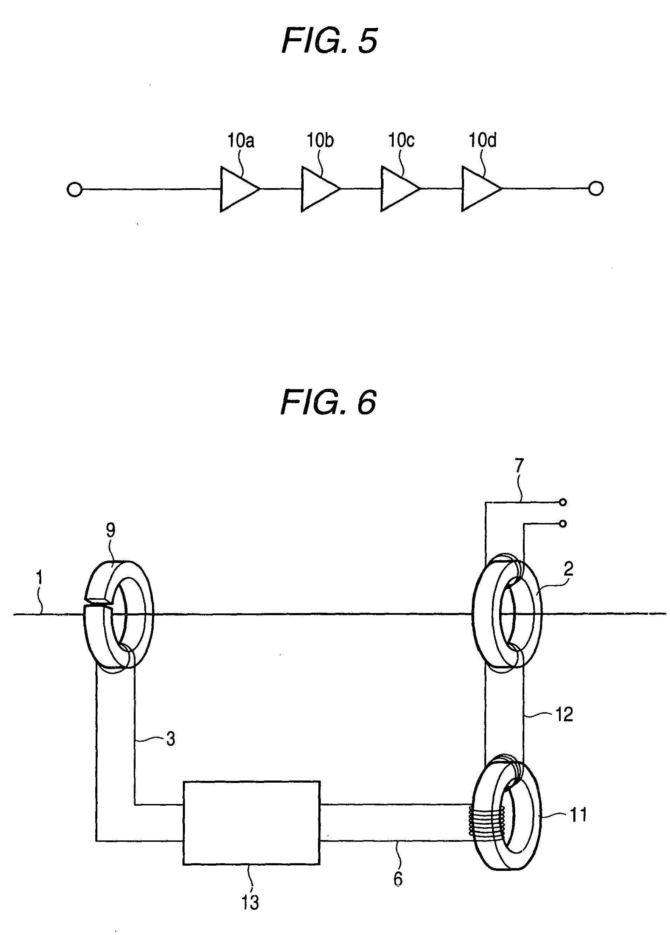

The current, entering a variable amplifier 10 as another electrical circuit means, is thus amplified. This variable amplifier 10 is comprised of a current-voltage converter circuit 10a, a phase adjustment circuit 10b, a gain control circuit 10c, and a voltage-current converter circuit 10d, which are serially connected together as shown Fig. 5.

As to the current-voltage converter circuit 10a, it converts the incoming current with the first frequency and the second frequency, which are induced by the magnetic flux φ1 of the core 2, into the respective voltage. After receiving the converted voltage, the phase adjustment circuit 10b carries out adjusting the phase φ1 of the voltage to a phase φ2 in such as way that the latter can cancel the former.

This phase-adjustedvoltage by the phase adjustment circuit 10b is now controlled its gain by the gain control circuit 10c, and converted to the current by the voltage-current converter circuit 10d. This converted current is supplied to the third wiring 6 through the next low pass filter (LPF) 5 as the current to generate magnetic flux φ2.

At the low pass filter (LPF) 5, the RF frequency current components obtained through said variable amplifier 10, corresponding to the communication current with the first frequency, is now removed so that only low-frequency current components, corresponding to the commercial current with the second frequency, is thus output to the third winding 6. The third winding 6 is wound on the core 2 which is the first ferromagnetic core to generate magnetic flux φ2 with the inverse phase of the magnetic flux φ1, being already produced in the core 2 excited by the power line 1, so that the magnetic flux φ2 cancels the magnetic flux φ1. In this case, said magnetic flux φ2 cancels only the magnetic flux φ1, corresponding to the commercial current with the second frequency, but does not cancel the magnetic flux that is corresponding to the communication current with the first frequency.

Furthermore, the first winding 7 is separately wound on the core 2. An electrical current induced by RF magnetic flux that is generated in the core 2 with the first frequency can be thus passed through the winding 7.

Turning to the core 9, in the case of the current value on the power line 1 being rather large, it is contemplated that magnetic saturation occurs in the core 9. In order to avoid such a magnetic saturation beforehand, it is preferable to employ the core 9 as shown in Fig. 3 which has a gap structure for leaking out the magnetic flux so as to lower the magnetic permeability.

Further, since the magnetic flux corresponding to the RF signal with the first frequency is relatively small component in such a case, it can be substantially neglected as a whole. Therefore, the electrical current induced in the second winding 3 becomes nearly equal to the current corresponding to the commercial current with the second frequency.

Turning back to the core 2, the magnetic flux corresponding to the commercial current with the second frequency can be canceled out by the third winding 6 so that there is no magnetic saturation being produced. Consequently, notching the core to form the gap is not required for the core 2 like the core 9 was required.

When the first winding 7 is loaded with the signal current for communications, the core 2 generates magnetic flux in the same way. The flux injects the signal current for communications into the commercial current flowing on the power line 1. Alternatively, the signal current for communications that is superimposed on the power line 1 forms magnetic flux in the core 2 which is extracted by the first winding 7.

Using the above apparatus, superimposing the signals of communication usage into the power line can be performed readily. Alternatively, it also makes it possible to extract readily the communication signal that is imposed on the power line.

An example of the configuration of a signal injection-extraction apparatus according to the third embodiment of the present invention is shown in Fig. 6.

The apparatus in this embodiment adopts the third ferromagnetic core as current amplifier transformer in order to suppress the current flowing from the electrical circuit means which passes the second frequency signal while removing the first frequency signal.

A pair of the ferromagnetic cores 2 and 9 are provided around a power line 1 as a line conductor. A commercial current and a superimposed electrical current for communications are flowing on the power line 1 which have a first and a second frequencies respectively. These current generate a magnetic flux φ₁ in the core 9 as a second ferromagnetic core. The magnetic flux φ₁ induces an electrical current in the second winding 3 wound around the core 9. This current becomes an input to an electrical circuit means 13 which includes a low-pass filter (LPF) 13a, a current-voltage converter circuit 13b with employing the buffer receiver, a phase adjustment circuit 13c, a gain control circuit 13d, and a voltage-to-current converter circuit 13e.

As one example of its use, the first frequency (RF frequency) is removed by the LPF 13a. The level and phase of the commercial current flowing into the line conductor 1 is detected by a current phase detecting transformer commonly used by the second ferromagnetic core. Then, the current-voltage converter circuit 13b, including the buffer receiver, converts said detected current value to the respective voltage value. Next, using this voltage value, the phase adjustment circuit 13c adjusts the phase of the canceling current, flowing through the fourth winding 12, so that the canceling magnetic field, being formed in the core 2, has a magnetic filed direction to cancel the magnetic flux already excited by the line conductor 1.

The gain of the amplified voltage is adjusted by gain control circuit 13d such that the magnetic force intensity of the canceling magnetic field, being formed in the core 2, becomes equal to that of being formed by the line conductor. Thereafter, an electrical current produced by the voltage-current converter circuit is fed into the third winding based on the voltage value through the process of controlling the gain thereof.

In other words, the electrical current from the second winding 3 contains first and second frequencies, however, the electrical current with the second frequency, corresponding to the commercial current, is extracted by the LPF 13a in the electrical circuit means 4. Then, the current undergoes through the phase deviation adjustment, gain control, and other processing so that an electrical current with the phase inverse to the input current is fed to the third winding 6 which is wound around a core 11 as a third ferromagnetic core to be used for the current amplification.

The current flowing through the third winding 6 with the second frequency induces magnetic flux φ₂ in the core 11. The magnetic flux φ₂ produces an electric current with the second frequency in a fourth winding 12 which is wound around the core 11. The fourth winding 12 is wound around the core 11 on one side, and on the other side of the winding is wound around the core 2 where the power line 1 is extending there through.

Accordingly, the current of the second frequency produced in the fourth winding 12 as a canceling current produces a magnetic flux φ₄ with the inverse phase in the core 2, however, since magnetic flux φ₃ was already formed in the core 2 by both the commercial current and the communication current, flowing through the power line 1, the magnetic fluxes φ₄ and φ₃ cancel each other. As the result, the magnetic flux remained in the core 2 is only the magnetic flux corresponding to the current of the first frequency that is used for the communication purpose.

Because of this magnetic flux, the current for communications of the first frequency is extracted into the first winding 7 which is wound on the core 2.

The current for communications with the first frequency, which is sent from an oscillator circuit (not shown) into the first winding 7, generates the magnetic flux corresponding to the current for communications in the core 2. Therefore, the generated magnetic flux can inject the current for communications into the power line 1.

The magnitudes of the magnetic flux φ₃ and the phase-inversed magnetic flux φ₄ might be preferably to be adjusted in such relation that φ₃ + φ₄ = "magnetic flux generated by the communication current". On the other hand, the current injected into the second winding 3 produced by the magnetic flux φ₁ formed in the core 9 might be preferably processed in a low-current state in the electrical circuit means 13. In order to fulfill these two requirements, there provided a current-amplifying where the core 11, third winding 6, and fourth winding 12 are provided between the electrical circuit means 4 and the core 2.

In this configuration, through the electrical circuit means 13, processing the current can be performed under relatively low-current state, then the current is boosted by the current amplifying transformer at the later stage. Accordingly, the required current value can be obtained, which can generates the inverse-phase magnetic flux φ₄ in the core 2 to be coped with the magnetic flux φ₃ originating to the current flowing on the power line 1. That is, the object can be achieved by setting the number of turns of the third winding 11 to be greater than that of the fourth winding 12, both being wound around the core 11 as the third ferromagnetic core, where both the windings and said ferromagnetic core constitutes the current amplifying transformer.

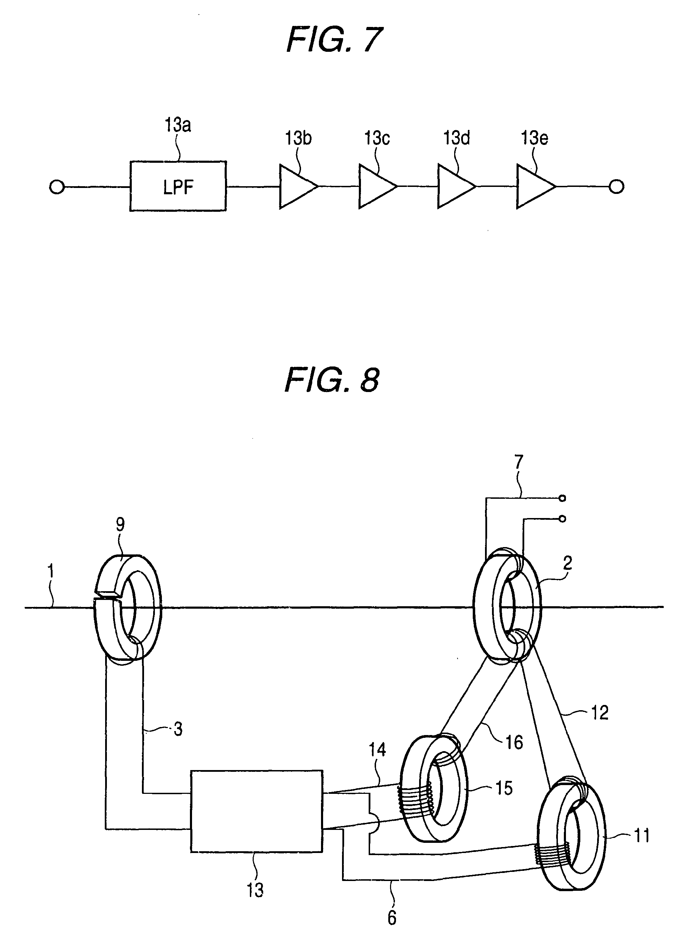

However, in case of the ratio of the turning numbers being increased, there is such a tendency of the magnetic field in the core 11 becoming too large, which ends up causing a magnetic saturation. Accordingly, it is proposed to employ a plurality of the current amplifying transformers as shown in Fig. 8. The difference of Fig. 8 with Fig. 6 resides in a pair of the cores 11 and 15 which are disposed between the electrical circuit means 13 and the core 2, and respective pair of the third windings 5 and 15 which are provided in parallel with extending from the electrical circuit means 13 , whereby said pair of the third windings 5 and 15 are wound around said pair of the cores 11 and 15 respectively. The fourth windings 12 and 16 are further provided so as to be wound around the cores 11 and 15 respectively with their other ends being wound around the core 2. In Fig. 8, a pair of the current-amplifying transformers are adopted, however, it is also possible to adopt other configuration such that more than two of such kinds of trans formers might be juxtaposed. In such a configuration, the output current can be distributed between the cores 11 and 15 so that a magnetic saturation can be avoided.

The shape of each magnetic core used in the present invention, more specifically, the magnetic core being disposed around the line conductor, such as the cores 2 and 9, passing through the power line 1, as shown in Fig. 6, it is preferable to determine their shapes by stacking ring-shape disks as shown in Fig. 6. This is because the magnetic flux distortion by the power line 1 might be reduced. It is noted that in the case of the core 6 being used as a current amplifying transformer, there is no power line passing through the core but only the third and fourth windings are wound it. Therefore, the aforementioned ring-shape disks may not be stacked but a rectangular shape transformer with a space formed in its center may be adopted instead of the ring-shape transformer. Preferably, however, the shape of each of the cores 2, 9, and 11 might be a shape obtained by stacking ring-shape disks as shown in Fig. 1. Furthermore, it is also preferable to make the difference between the outside diameter and the inside diameter to be equal , and as to the total thickness of stacking the cores, it is also preferable to set them equal for easy winding. In addition, the magnetic characteristics obtained after the winding might be also in preferable conditions.

As for the material to be adopted for making the core, material having large magnetic hysteresis might be good for the cores 2, 9 and 11. Especially, for the signal injecting extracting purpose, ferrite showing large magnetic permeability at high frequencies is preferably used for the magnetic core with such a use (e.g. core 2 in Fig. 1). This is because it is necessary to increase the coupling efficiency of high frequencies.

Turning to the material used for forming a phase detection transformer, Iron or silicon steel having relatively large saturation magnetic flux density might be preferable (e.g. core 9 in Fig. 6). Further, such materials having large saturation magnetic flux density are also preferably adopted for the magnetic core used as the current amplifying transformer (e.g. core 11 in Fig. 6).

The magnetic core (e.g. core 9 in Fig. 6) used as a phase detection transformer preferably has a gap structure. In Figs. 6, 8, and 9 (later described), magnetic cores of this gap structure are shown as all of cores 9 and 9a. By adopting this structure, magnetic saturation can be less likely to occur if the current flowing into the power line 1 as the line conductor increases.

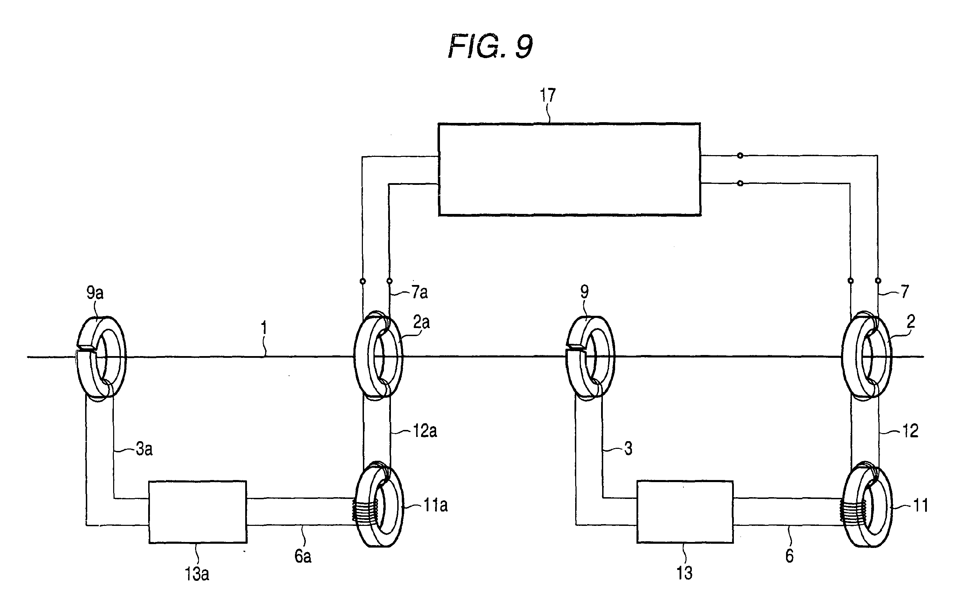

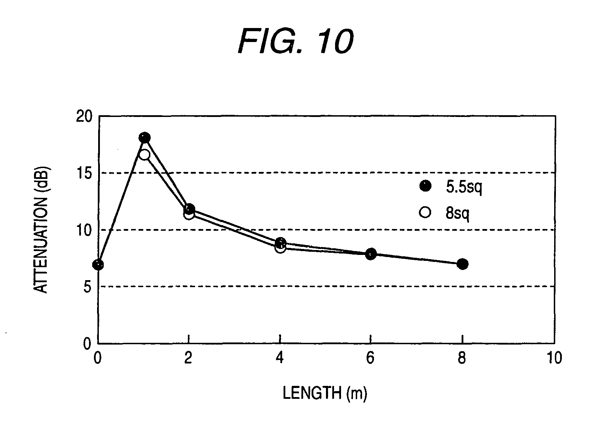

As described so far, in the present invention, the commercial current can be canceled without applying large current load to the electrical circuit means, by incorporating the current amplification transformer configuration. However, we have succeeded in deriving more preferable results . This is described with reference to Figs. 9 and 10.

Fig. 9 is a diagram illustrating the results of the experiments regarding signal injection and extraction into and from a line conductor, using two sets of signal injection-extraction apparatus according to the present invention. To inject and extract signals for communications into and from the power line 1 that is a line conductor, it is necessary to cancel the magnetic flux due to the current having the second frequency attributed to the commercial current out of the magnetic flux produced in the cores 2 and 2a.

Large electrical current with the first frequency flows through the fourth windings 12 and 12a that apply the canceling magnetic fluxes to the cores 2 and 2a, respectively. Therefore, the impedances of the windings tend to be selected to be small. However, if the impedances of the fourth windings 12 and 12a are set smaller, the following problem arises. That is, when the first windings 7 and 7a are loaded with signal current having the first frequency, the signal current are coupled to the fourth windings 12 and 12a via the cores 2 and 2a, respectively. This decreases the coupling efficiency of signals into the power line 1.

Various means for increasing the impedances of the fourth windings 12 and 12a at the first frequency are conceivable. We made measurements using various lengths of the windings to permit the impedances to be increased while maintaining the large current value. The measurements were made under the following conditions.

The power line 1 having a frequency of 60 Hz provided a commercial power supply. This was an ordinary commercial power line for domestic use. A commercially available network analyzer was utilized as a network analyzer 17 using a frequency of 10 MHz. All of the cores 2, 2a, 9, 9a, 11, and 11a, assumed a ring-like shape and had an inside diameter of 60 mm, an outside diameter of 100 mm, and a thickness of 20 mm. The cores 2 and 2a were made of ferrite. The cores 9 and 9a were made of iron having a gap. The gap width was 0.5 mm. The cores 11 and 11a were made of iron. The functions of low-pass filter (LPF), buffer receiver, phase adjustment circuit, gain control circuit, and voltage-to-current converter circuit were included in the electrical circuit meanss 13 and 13a.

The first windings 7 and 7a were used for communications and had a cross section of 0.2 mm². The numbers of turns of the winding around the cores 2 and 2a, respectively, were both two. The second windings 3 and 3a were used for phase detection and had a cross section of 0.2 mm². The numbers of turns of the windings 3 and 3a around the cores 9 and 9a, respectively, were both 250. Third windings 6 and 6a were used for current amplification and had a cross section of 0.2 mm². The numbers of turns of these windings around the cores 11 and 11a, respectively, were both 400. The fourth windings 12 and 12a were used for cancellation of the magnetic field and had cross sections of 5.5 mm² and 8 mm², respectively. The numbers of turns of the windings 7 and 7' on the cores 11 and 11a were both 10. The numbers of turns of the windings 12 and 12a on the cores 2 and 2', respectively, were both 1.

The results of measurements made with various lengths of the fourth winding 12 under the above-described conditions are shown in Fig. 3. Where the fourth winding 12, winding for cancellation, was not used, the values are obtained under the commercial current was ceased during the measurements. The horizontal axis indicates the length of the fourth winding 12 used for cancellation. The parameter was the cross section of the winding. The vertical axis indicates the attenuation factor measured by injecting a signal into the power line 1 from one side of the network analyzer 17 and extracting the signal from the power line 1 from the other side. In this case, where the length of the fourth winding 12 is more than 2 m, the attenuation factor is small. Where the length is more than 3 m, the attenuation factor is less than 10 dB with preferable results. It is judged that the coupling efficiency is sufficient.

That is, the impedance of the fourth winding 12 can be adjusted by increasing the length of the winding that is used for cancellation. It is to be noted, however, that increasing the length of the winding 12 excessively will increase the coupling efficiency but is undesirable from an economical point of view. Also, a large space will be occupied. Hence, the increase in the length should be restricted to bare minimum.

The foregoing embodiments were chosen and described in order to explain the principles of the invention, and modifications and variations made by one skilled in the art are possible in light of the above teachings or may be acquired from practice of the invention.

The signal injection-extraction apparatus according to the present invention is an apparatus capable of selectively extracting and injecting an electrical current for communications from a state in which an electrical current for power and the electrical current for communications have been superimposed in power line carrier communications where a signal for communications is superimposed on a power line and sent and received.

## Claims

1. An apparatus for injecting and extracting signals, comprising:
a ferromagnetic core which allows a line conductor to pass therethrough;
a first winding wound around an outer surface of said ferromagnetic core which extracts a signal of a first frequency flowing through the line conductor, or injects a signal of the first frequency into the line conductor;
a second winding wound around the outer surface of said ferromagnetic core, which enables to extract a signal of the first and the second frequencies from a magnetic flux φ₁ that is generated in said ferromagnetic core by an electric current having the first and the second frequencies which flows through the line conductor, said second winding allowing an electric current corresponding to the first and second frequencies to flow therethrough;
an electrical circuit means for amplifying the electric current extracted from said second winding andwremoving current components of the first frequency; and
a third winding, being wound around the outer surface of said ferromagnetic core and connected to said electrical circuit means, through which a signal for generating a magnetic flux φ₂ in the ferromagnetic core is produced, wherein
said magnetic flux φ2 is formed to be corresponding to current components of the second frequency, and a phase thereof is set to be a phase inverse to that of the magnetic flux φ1.

2. An apparatus for injecting and extracting signals, comprising:
a ferromagnetic core which allows a line conductor to pass therethrough;
a second winding wound around the outer surface of said ferromagnetic core, which enables to extract a signal of the first and the second frequencies from a magnetic flux φ₁ that is generated in said ferromagnetic core by an electric current having the first and the second frequencies which flows through the line conductor, said second winding allowing an electric current corresponding to the first and second frequencies to flow therethrough;
an electrical circuit means for amplifying the electric current extracted from said second winding and removing current components of the first frequency;
a third winding wound around the outer surface of said ferromagnetic core to inject a signal for producing magnetic flux φ₂ in the core of said ferromagnetic core in such a way that said magnetic flux φ₂ is formed to be corresponding to the current of said second frequency, and a phase thereof is set to be a phase inverse to that of said magnetic flux φ₁; and
a communication circuit means , being branching off from said third winding, which enables to extract or inject a signal of the first frequency.

3. An apparatus for injecting and extracting signals, comprising:
a first ferromagnetic core which allows a line conductor to pass therethrough;
a first winding wound around an outer surface of said first ferromagnetic core which extracts a signal of a first frequency flowing through the line conductor, or injects a signal of the first frequency into the line conductor;
a second ferromagnetic core, being disposed separately from the first ferromagnetic core which allows the line conductor to pass therethrough;
a second winding wound around the outer surface of said second ferromagnetic core, which enables to extract a signal of the first and the second frequencies from a magnetic flux φ1 that is generated in said second ferromagnetic core by an electric current having the first and the second frequencies which flows through the line conductor, said second winding allowing an electric current corresponding to the first and second frequencies to flow therethrough;
an electrical circuit means for amplifying the electric current extracted from said second winding and removing current components of the first frequency, and
a third winding wound around the outer surface of said first ferromagnetic core to inject a signal for producing magnetic flux φ₂ in the core of said first ferromagnetic core in such a way that said magnetic flux φ₂ is formed to be corresponding to the current of said second frequency, and a phase thereof is set to be a phase inverse to that of said magnetic flux φ1.

4. An apparatus for injecting and extracting signals, comprising:
a first ferromagnetic core which allows a line conductor to pass therethrough;
a first winding wound around an outer surface of said first ferromagnetic core which extracts a signal flowing through the line conductor, or injects a signal into the line conductor;
a second ferromagnetic core, being disposed separately from the first ferromagnetic core which allows the line conductor to pass therethrough;
a second winding wound around the outer surface of said second ferromagnetic core, which enables to output an electric current based on a magnetic flux that is generated in said first ferromagnetic core by an electric current flowing through the line conductor;
an electrical circuit means for processing the electric current extracted from said second winding so as to extract current component having a certain frequency;
a third winding wound around the outer surface of a third ferromagnetic core;
a fourth winding wound around the outer surfaces of said first and third ferromagnetic cores.

5. An apparatus for injecting and extracting signals as set forth in any one of claims 1 to 3, wherein said first frequency is a relatively high frequency, while said second frequency is a relatively low frequency.

6. An apparatus for injecting and extracting signals as set forth in any one of claims 1 to 3, wherein said electrical circuit means includes an amplifier and a low-pass filter.

7. An apparatus for injecting and extracting signals as set forth in claim 5, wherein said second frequency is a commercial frequency.

8. An apparatus for injecting and extracting signals as set forth in claim 2, wherein said circuit unit for communications has a capacitor.

9. An apparatus for injecting and extracting signals as set forth in claim 4, wherein said third winding, said third ferromagnetic core, and said fourth winding are provided with a plurality numbers thereof respectively.

10. An apparatus for injecting and extracting signals as set forth in any one of claims 4 and 9, wherein the first ferromagnetic core is made of ferrite, further wherein each of the second and third ferromagnetic cores is made of iron or silicon steel laminations.

11. An apparatus for injecting and extracting signals as set forth in any one of claims 4, 9 and 10, wherein number of turns of the third winding wound around the third ferromagnetic core is greater than that of the fourth winding.

12. An apparatus for injecting and extracting signals as set forth in any one of claims 3, 4, 9 and 10, wherein said second ferromagnetic core has a gap structure.
